# EUROPEAN PATENT APPLICATION

(11) **EP 0 639 536 A1**
(43) Date of publication of application: **22.02.1995**
(21) Application number: 94306054.1
(22) Date of filing: 17.08.1994
(51) Int. Cl.: C02F 3/28, C02F 3/06

(54) **Septic tank**

(30) Priority: 19.08.1993 GB 9317276
(71) Applicant: Copa Products Ltd., Falmouth, Cornwall TR11 4SN (GB)
(72) Inventor: Froud, David Peter, Copa Products Ltd., Copa House, Marden, Tonbridge, Kent TN12 9OJ (GB); Collet, Peter, South West Water Plc., Exeter, Devon EX2 7HR (GB)
(74) Representative: Lewin, John Harvey

(57) **Abstract**

The invention relates to a septic tank (10) which contains a biological aerated filter (21, 26, 27).

## Description

This invention relates to a septic tank which is designed to operate with aerobic microorganisms, rather than anaerobic microorganisms. The invention also relates to an apparatus and method for the modification of existing septic tanks, so that they can be converted from using anaerobic microorganisms to using aerobic microorganisms, and furthermore to septic tanks which incorporate this improvement.

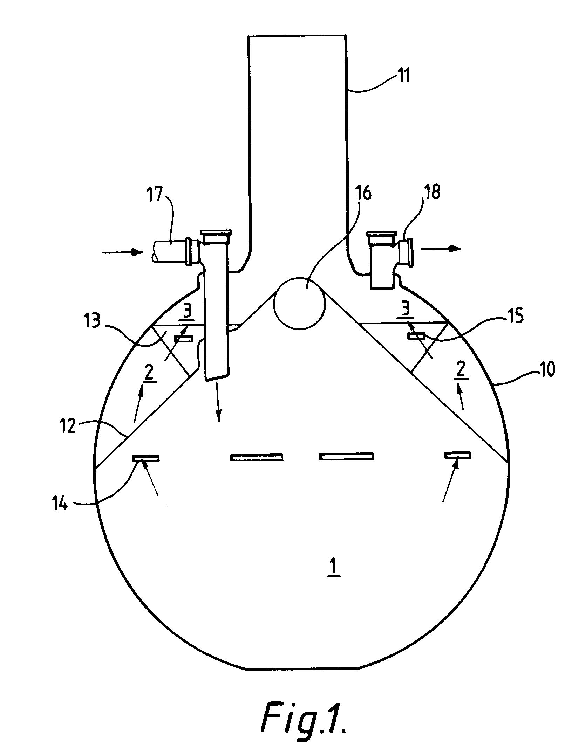

A common form of septic tank used at present is shown in Figure 1 of the accompanying drawings. Because of its shape it is known as an "onion tank". The tank comprises a substantially spherical body 10 with a tubular extension 11 from its upper part. A conical shroud 12 defines a lower chamber 1. A circumferential partition 13 extends between the outer part of the shroud 12, about half way up, and the inner wall of the chamber 10, to define thereby an intermediate chamber 2 and an upper chamber 3. Openings 14 are provided in the lower part of the shroud 12 to communicate between chamber 1 and chamber 2. Openings 15 are provided in the partition 13 to communicate between chambers 2 and 3. The upper part of the shroud 12 has an opening which would communicate directly between chamber 1 and chamber 3, but this opening is normally closed by a floating ball seal 16. An inlet 17 is provided for incoming effluent, and passes from outside the tank directly into the lower chamber 1. An outlet 18 provides for the outflow of treated effluent, and passes from the upper chamber 3 to outside the tank.

Effluent flows into the tank and solid matter settles towards the bottom of the lower chamber 1. The tank, in particular the chamber 1, contains anaerobic microorganisms which assist in the digestion of noxious substances. Septic tanks only convert solid matter to liquid by anaerobic microorganisms, and the effluent produced is "septic" and much inferior in quality to fresh crude sewage. In the course of treatment, effluent passes through the openings 14 from chamber 1 to chamber 2, and through the openings 15 from chamber 2 to chamber 3, from which it then leaves by the outlet 18. occasionally there is a need to desludge the tank. This is done by passing a suction tube through the extension 11, past the ball seal 16 and to the bottom of the lower chamber 1.

A problem with septic tanks such as that described above is that anaerobic microorganisms are not as effective as aerobic microorganisms in purifying the effluent. The present invention solves this problem by providing a septic tank which incorporates a biological aerated filter, as a result of which the microorganisms in the tank will be predominantly aerobic rather than anaerobic.

The invention can be put into effect by means of a purpose-built septic tank incorporating a biological aerated filer, or by converting an existing septic tank so as to incorporate the improvement.

The invention also relates to the use in a septic tank of a biological aerated filter, which is preferably contained in an upright tube with openings at or near the top and bottom.

Biological aerated filters are known in themselves. They generally comprise a tank packed with a solid matrix which provides a large surface area on which colonies of aerobic microorganisms exist as a biomass. In use, effluent flows in and out of the tank, maintaining an approximately equal level, so that the biomass is submerged in the effluent. Beneath the solid matrix, there is provided a plurality of air diffusers, which blow a stream of fine air bubbles through the solid matrix. The air flow is sufficient to ensure a constant supply to the microorganisms, so as to maintain them in the aerobic state. It ensures sufficient mixing in the effluent, and the air flow also scours excess biomass from the solid support. Such biological aerated filters are an efficient means of treating effluent with aerobic microorganisms. However, they are somewhat large and cumbersome to use, and sometimes the air flow from the air diffusers does not readily reach all parts of the solid support.

The present invention therefore preferably uses a more compact and efficient form of biological aerated filter, which can readily be inserted into an existing conventional septic tank. In one embodiment, the biological aerated filter comprises an upright tube, open at the top and the bottom, provided with a packing of solid matrix, and having an air diffuser at the lower end, so that the air bubbles travel upwardly throughout the matrix.

Preferably the tube is of cylindrical shape, and the active area of the air diffuser is circular. The diameter of this active area is preferably at least half the internal diameter of the tube, more preferably at least ¾ of the internal diameter, and most preferably at least 90% of the internal diameter.

An air supply line is provided to the air diffuser. The air supply line can be connected to an external air pump, which may be controlled by a suitable timer.

Reference is now made to the accompanying drawings, in which:
Figure 1 is a diagrammatic section through a conventional septic tank, as already described; and
Figure 2 corresponds to Figure 1, but shows the addition of a biological aerated filter according to an embodiment of the invention.

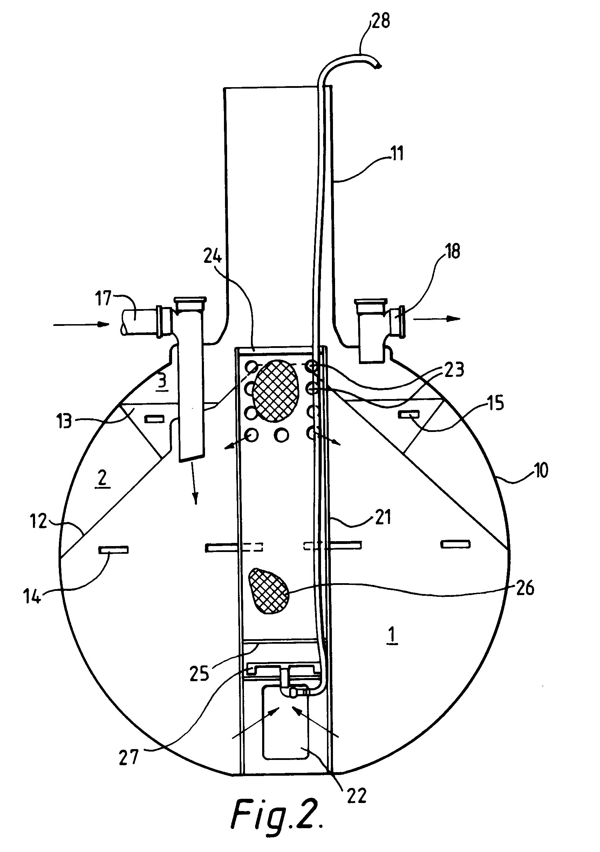

Figure 2 illustrates the conversion of a conventional septic tank, as described in relation to Figure 1, to incorporate a biological aerated filter according to an embodiment of the invention. For those parts which are in common with Figure 1, the reference numerals in Figure 2 are the same. The tank has been modified by cutting our a circular hole at the top of the conical shroud 12, and removing the ball seal 16, then inserting an upstanding tube 21 which incorporates the biological aerated filter. The tube 21 rests with its lower end at the bottom of the chamber 1. Close to the lower end are one or more openings 22. Close to the top end there is a plurality of holes 23, most of which are below the shroud 12, and hence only communicate with the lower chamber 1, but the uppermost holes 23 are above the level of the shroud and hence communicate with the upper chamber 3. The top end itself of the tube 21 is sealed by and end plate 24.

In the lower part of the tube 21 there is a support 25 which is held in place by a welded in support ring. The support mesh 25 supports a column of solid support matrix which extends up to the top of the tube. The support matrix 26, which is only shown diagrammatically in the drawing, is normally submerged in effluent and supports a microbial biomass consisting of colonies of aerobic bacteria. The support matrix may, for example, be corrugated layers of plastics material, such as rigid PVC.

Below the support mesh 25 there is an air diffuser 27, which is supplied by air from an air pipe 28 which leads from the outside, down through the extension 11 and through the tube 21. A suitable air diffuser is a disc diffuser as marketed under the trade mark DIDIER. This includes a perforated membrane which expands when supplied with compressed air, to permit the escape of a stream of fine air bubbles. The diameter of the disc diffuser is preferably close to the internal diameter of the tube 21, to ensure thorough aeration of the support matrix 26. The upward airflow from the diffuser 27 thus passes through the support matrix 26 and entrains a flow of liquid effluent. The holes 23 in the top portion of the tube 21 provides the means of recirculation of effluent within the tank as the liquid effluent level rises and falls. When the level of liquid effluent in the tank reaches a predetermined level, the liquid is "pumped" by the air lift through the tube into the top chamber. At lower liquid levels, the liquid is passed through the holes 23 and recirculated to the lower chamber, so as to ensure continuous biological degradation, oxygenation and recirculation of the liquid in the tank. The process c an operate by continuous discharge or by incorporating a pump (controlled by either a timer or a level switch) working on the "fill and draw" principle.

The invention provides a relatively simple and cost-effective method for converting an existing septic tank from an anaerobic digester into an aerobic system. This improves the quality of the discharged effluent, and there is a reduction in offensive smells. As the invention provides for the conversion of an existing septic tank, there is no need for the expensive engineering work involved in construction of a new sewage system. However, the principle of the invention can also be employed in a purpose-built septic tank.

The biological aerated filter may also be used in larger septic tanks comprising an under concrete tank. These tanks would serve a larger population of a few households. The filter is installed into such a tank via one of the inspecting manholes.

This invention thus provides a flexible system enabling a biological aerated filter to be installed into various designs of septic tank.

## Claims

**1** A septic tank (10) which contains a biological aerated filter (21, 26, 27).

**2** A septic tank according to Claim 1, in which the biological aerated filter comprises an upright tube (21), open at the top and the bottom, provided with a packing of solid matrix (26) which provides a support for microbial biomass, and having an air diffuser at the lower end, so that, in use, air bubbles travel upwardly throughout the matrix and surrounding liquid waste.

**3** A septic tank according to Claim 2, in which the tube (21) is of cylindrical shape, the active area of the air diffuser (27) is circular, and the diameter of this active area is at least half the internal diameter of the tube.

**4** A septic tank according to Claim 2 or 3, in which the air diffuser (27) includes a perforated membrane which expands when supplied with compressed air to permit the escape of a stream of air bubbles through surrounding liquid.
